# EUROPEAN PATENT SPECIFICATION

(11) **EP 1 338 166 B1**
(45) Date of publication and mention of the grant of the patent: **09.01.2008**
(21) Application number: 01982994.4
(22) Date of filing: 06.11.2001
(51) Int. Cl.: H04Q 7/38, H04Q 7/22

(54) **RELEASE OF USER EQUIPMENT USING A PAGE PROCEDURE IN A CELLULAR COMMUNICATION SYSTEM**
TEILNEHMERGERÄT-ABBAU MITTELS EINES RUFVERFAHRENS IN EINEM ZELLULAREN KOMMUNIKATIONSSYSTEM
LIBERATION D'UN EQUIPEMENT UTILISATEUR UTILISANT UNE PROCEDURE DE RECHERCHE D'UNE PERSONNE DANS UN SYSTEME DE COMMUNICATION CELLULAIRE

(30) Priority: 28.11.2000 US 724754
(43) Date of publication of application: 27.08.2003
(73) Proprietor: TELEFONAKTIEBOLAGET LM ERICSSON (publ), 164 83 Stockholm (SE)
(72) Inventor: JOHANSSON, Tomas, 171 63 Solna (SE); WALLENTIN, Stefan, Pontus, S-590 71 Ljungsbro (SE)
(74) Representative: Kühn, Friedrich Heinrich
(86) International application number: PCT/SE2001/002445
(87) International publication number: WO 2002/045456

(56) References cited:
- WO-A-01/52574
- WO-A-94/05095
- WO-A-98/48581
- WO-A-99/17579
- US-A- 5 745 695
- "Universal Mobile Telecommunications System (UMTS); RCC Protocol Specification (3G TS 25.331 version 3.1.0 Release 1999)" ETSI, [Online] January 2000 (2000-01), XP002168727 Retrieved from the Internet: <URL:www.etsi.org> [retrieved on 2001-06-01] cited in the application

## Description

### BACKGROUND OF THE INVENTION

### Technical Field of the Invention

The present invention generally relates to the telecommunications field and, in more particular to a method for releasing User Equipment (UE), such as mobile stations and Personal Digital Assistants (PDAs) as well as a variety of other equipment, using the Paging Control Channel (PCCH). The procedure may include either a release indication in the paging message, or it may allow the release procedure over the PCCH.

### Description of Related Art

The publication "Universal Mobile Telecommunications System (UMTS); RRC Protocol Specification (3GTS 25.331 v. 3.1.0 Release 1999)", in particular "3GTS 25.331", page 36, section 8.1.2.1 and page 37, section 8.1.4.5 - section 8.1.4.6 shows a release procedure. However, section 8.1.4.2 clearly defines that the procedure, discussed on pages 36 and 37, requires that the User Equipment (UE) be in state CELL_DCH or CELL_FACH. In both the CELL_DCH state and the CELL_FACH state, there is a dedicated control channel (DCCH) for transmission of signaling messages between the UE and the RAN. Thus, 3GTS 25.331 teaches the use of a dedicated control channel for the release and acknowledgment messages.

WO 99/17579 relates to a paging procedure of a mobile in a mobile telephone network. To establish a circuit switched connection, the mobile telephone network sends a page request as a result of which the mobile switches to a stand-by mode for a circuit-switched connection. There is nothing mentioned about a release procedure as in the present invention.

WO 94/05095 (page 7, line 30 through page 8, line 13; page 10, lines 2-5; and FIG. 2 shows the use of a common control channel for uplink signaling between the UE and the RAN. There is no teaching or suggestion of sending a release message to the UE via the paging control channel.

US patent 5,745,695 relates to suspending data service while remaining logged on to the system and corresponding signaling from a remote station to a support node. Paging requests are communicated during time periods data is not communicated. There is no teaching or suggestion of sending a release message to the remote station via the paging control channel.

WO 98/48581 relates to a method of de-allocating one or more physical channels previously allocated for packet switched transmission between a plurality of mobile stations. The technical area to which this publication relates can be compared with releasing a radio channel in general as de-allocation implies a release of a channel for one transmission (packet switched) in favour of another transmission, a circuit switched connection. It is mentioned that in order to achieve the de-allocation, a RLC/MAC control message is broadcasted and on the same carrier frequency as was used for the de-allocated physical channel. Thus this publication does not describe the particular channel release according to the present invention.

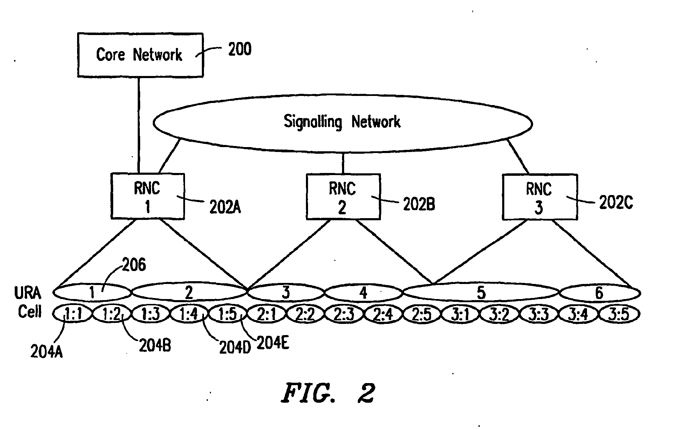

"Third Generation Partnership Project RRC Protocol Specification" release 1999, pages 32-33, 36-37, 71-73, and 99-105 (hereinafter "Release 99"). In Release 99 a Wide Band Code Division Multiple Access (WCDMA) standard is provided for the wireless communication community. Basic WCDMA architecture is shown in Figure 2 and should be referred to for basic understanding of an exemplary WCDMA networks. The following general descriptions and general definitions will further provide background and understanding to the embodiments of the present invention.

User Equipment (UE) is generally a type of mobile terminal by which a subscriber can access services offered by the operator's Core Network (CN) 200.

Each Radio Network Controller (RNC) 202 a, b, c controls radio resources and radio connectivity within a set of cells. A cell 204a-204e is a geographical area where radio coverage is provided by a base station.

An UTRAN Registration Area (URA) 206 is generally a geographical area comprising one or more cells 204A-204E. Each URA is identified by a substantially unique identity. The unique identity is broadcast in all cells belonging to the URA 206. A URA can comprise cells controlled by more than one RNC 202. URAs may overlap, therefore a set of URA identities may be broadcast in certain areas.

In an exemplary WCDMA radio interface, there are three fundamentally different kinds of channels. The three channel types are physical channels, transport channels, and logical channels.

A physical channel is the physical radio resource on which data is transmitted. Data items such as frequency, code and time slot information may characterize the information found on a physical channel. Examples of physical channels are a dedicated physical data channel (DPDCH) and a secondary common control physical channel (SCCPCH).

A transport channel is used to provide services from the physical layer. A transport channel is characterized by how data may be transmitted. Transport channels may be in the form of a common transport channel and a dedicated transport channel. The physical layer of the system maps transport channels on to physical channels. Examples of common transport channels are:
random access channel (RACH) - a RACH channel is a contention based up-link channel used for transmission of relatively small amounts of data (e.g. for initial access or non-real-time dedicated control or traffic data);
forward access channel (FACH)-an FACH is a common down-link channel without closed - loop power control. An FACH channel is used for transmission of relatively small amounts of data;
Broadcast channel (BCH) - a broadcast channel is a down-link channel used to broadcast system information into an entire cell such that all UEs within the designated cell receive information contained in the BCH; and
Paging Channel (PCH) - a PCH is a down-link channel used for broadcasting control information into an entire cell which allows efficient UE sleep mode procedures, enabling discontinuous reception (DRX). Information currently used by PCH are paging and notification information.

An example of a dedicated transport channel (DCH) is a channel that is dedicated to a UE which is used an up-link or down-link scenario.

The third type of channel is the logical channel. The MAC layer provides data transport services on the logical channels. A set of logical channels may be defined for different kinds of data transfer services as offered by MAC. Each logical channel type is defined by the type of information that is transferred to them from thereon. Generally, there are type types of logical channels, control channels (for the transfer of control plane information) and traffic channel (for the transfer of user plane information).

Control channels (CCH) include broadcast control channels (BCCH), paging control channels, (PCCH), dedicated control channels (DCCH) and common control channels (CCCH). Control channels are used for the transfer of control plane information only. Such information includes signaling information. A BCCH is a down-link channel for broadcasting system control information. A PCCH is a down-link channel that transfers paging information. A PCCH channel is used when a UE is utilizing DRX (discontinuous reception) procedures. A CCCH is a bidirectional channel for transmitting control information between the network and UE. The CCCH channel is commonly used by UE which has no RRC connection with the network. The CCCH is also used by UE using common transport channels when the UE is accessing a new cell after cell reselection. A DCCH is a bidirectional channel that transmits dedicated control information between a UE and the network. A DCCH channel is established through an RRC connection set-up-procedure.

With respect to traffic channels (TCH) there are basically two kinds of traffic channels: dedicated traffic channels (DTCH) and common traffic channels (CTCH). Traffic channels are used to transfer user plane information only. Such user information may include user data information. The DTCH is a point to point channel which is dedicated to only one UE at a time for the transfer of user information. A DTCH can provide both up-link and down-link services. A CTCH is a point-to multipoint unidirectional channel for the transfer of dedicated user information which is to be provided to all or specific portion of specified UEs.

Under the WCDMA specification the following connections may exist between the logical channels and transport channels discussed above.

BCCH may be connected to BCH and may also be connected to FACH.

PCCH can be connected to PCH.

CCCH may be connected to RACH and FACH.

DTCH can be connected to either RACH and FACH, to RACH, or to a DCH.

DCCH can be connected to either RACH and FACH or to a DCH.

CTCH can be connected to FACH.

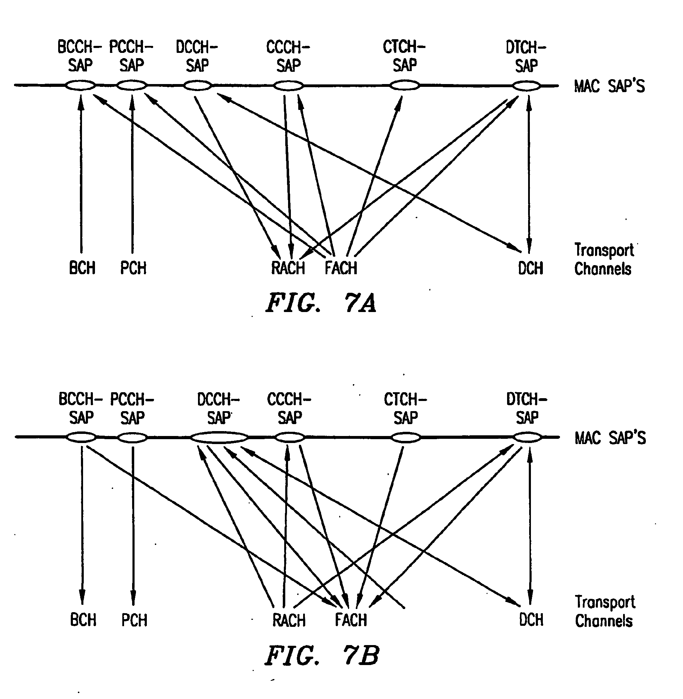

The channel mappings as seen from the UE and UTRAN sides of the system are shown in Figures 7A and 7B respectively.

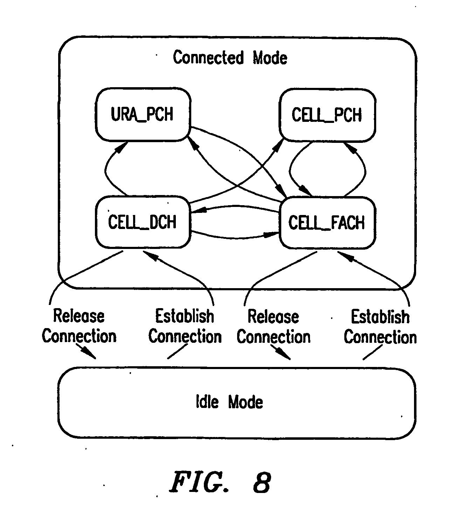

Referring now to a state model of a UE, Figure 8 discloses the generally used state model of a UE. The idle mode (IM) is entered after power on. And within this state there are no connections between the UE and UTRAN. When a connection is established, the UE is assigned to a Radio Network Temporary Identity (U-RNTI and optionally a C-RNTI) and the UE enters Connected Mode. When in Connected Mode there are four different states. Each state reflects a level of activity. The four states are CELL DCH state, CELL FACH state, CELL PCH state, and URA PCH state.

The CELL DCH state is characterized by having at least one dedicated channel (DCH) assigned to the UE. Macro-diversity may be used between dedicated physical channels of several cells. When dedicated physical channels are assigned, dedicated transport channels (DCHs) are used and mapped on those dedicated physical channels. In this CELL DCH state, there is a dedicated control channel (DCCH) used for transmission of signaling messages between the UE and UTRAN. In the CELL FACH state, no dedicated physical channel is assigned, but the UE may listen continuously to a common channel (the FACH) in the down-link belonging to the selected cell. In the up-link, the UE typically uses a random access channel (RACH). At each cell reselection, the UE updates the network with its current cell location. In this cell FACH state, there is a dedicated control channel (DCCH) used for transmission of signaling messages between the UE and the UTRAN. The DCCH is preferably implemented by appending the Radio Network Temporary Identity (U-RNTI or C-RNTI) to all signaling messages, and thus addressing the individual UE. The U-RNTI (UTRAN RNTI) is a global identity, which can be used in any cell in the UTRAN. The C-RNTI (cell RNTI) is only significant in a single cell and has to be reallocated in every cell. On the other hand, C-RNTI is much shorter than the U-RNTI which saves space (band width) over the radio interface which it is used. There is also a CCCH (common control channel) in this CELL FACH state, which is used when the connection to SRNC is unavailable. It is used to handle cell reselection over RNC boarders when cell update or URA update messages are sent to the DRNC.

In the CELL PCH state, the UE monitors a paging channel (PCH) ofa selected cell. On the PCH, the UE uses discontinuous reception (DRX) to save power. When discontinuous reception is used, the UE only needs to listen on the PCH at periodic occasions. The scheme for when the UE is to listen is prescribed between the network and the UE on a per UE basis. Also, the UE updates the network with its current cell location at the time of the cell reselection. No DCCH is available on the CELL PCH state. On the PCH, there is an ability to address individual UEs, but a UE cannot transport any signaling messages to the network.

The URA PCH state is very similar to the cell PCH state. In this state, the UE also listens to the PCH as it uses the DRX. The difference between the URA PCH state and the cell PCH state is that the UE only updates the network of its location after crossing URA boarders in the URA PCH state. A URA (UTRAN registration area) is a group of cells. This means that in this state the position of the UE is in a position that is generally known only on the URA level.

The release of a radio resource control (RRC) connection must be performed using the RRC Connection Release procedure. In order to utilize the RRC Connection Release procedure, a UE must be in a state that allows the UMTS Terrestrial Radio Access Network (UTRAN) to communicate with it on one of the logical channels, specifically the dedicated control channel (DCCH). However, when the UE is in low traffic areas, the state changes and the UE switches to monitor another logical channel, which is the paging control channel (PCCH). The DCCH is released and the UE listens only to the paging control channel. Therefore, the UTRAN must page the UE to change to another state in order that a dedicated control channel can be established between them.

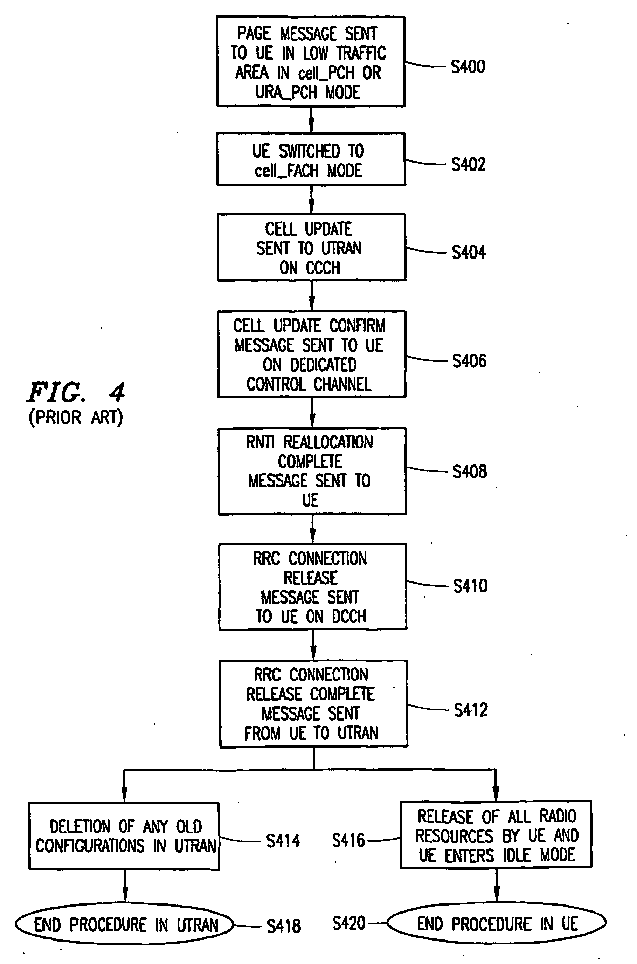

Referring to FIGURE 4 (PRIOR ART), there is illustrated a flow diagram of a traditional method for the release of an RRC connection. When there is low traffic to or from the UE, the UE is in a state that monitors only the paging control channel, either the cell-PCH state or the URA-PCH state. In the cell-PCH state, no dedicated channel is allocated to the UE and therefore no uplink activity is possible at this point. Also, in the URA-PCH state, no dedicated channel is allocated to the UE, thus preventing any uplink activity. A UE is only capable of monitoring the PCCH when in either the cell-PCH or URA-PCH state. Any activity between the UE and UTRAN will cause the UE to transfer to the CELL FACH state. Therefore, when the UTRAN pages the UE on the PCH at step s400, the UE will switch to the CELL FACH state in step s402. When switched to the CELL FACH state, no dedicated channel exists, however, the UE acquires the ability to communicate to the network via a DCCH. In step s404, the UE, upon receipt of a page, will switch states and transmit a CELL UPDATE message on the common control channel (CCCH). In response to the updated cell information, the UTRAN will send a CELL UPDATE CONFIRM message on the dedicated control channel in step s406. In step s408, a RNTI REALLOCATION COMPLETE message is transmitted on the DCCH to the UTRAN. Finally, in step s410, an RRC CONNECTION RELEASE message can be sent to the UE from the UTRAN. Once this message is received from the UTRAN, in step s412, the UE sends an RRC CONNECTION RELEASE COMPLETE message back to the UTRAN. Following step s412, the UTRAN deletes old configurations in step s414. In step s416, the UE releases all radio resources and enters idle mode. When in idle mode a UE will acquire system information, perform measurements, and be prepared to receive paging and notification messages. Both the UE and the UTRAN end the release procedure in the following steps, s418 and s420.

The disadvantages of the above described procedure begin with the fact that a dedicated control channel must be used just to release a UE. Also, a large amount of signaling in the air interface and in the UTRAN must occur in order to complete the release procedure, which reduces speed to the subscriber. Furthermore, significant battery power of the UE is expended when the release is completed using the traditional procedure mentioned above. Therefore, there is a need for a method to release a UE in a more efficient manner.

### SUMMARY OF THE INVENTION

The present invention is a method for releasing a UE without using a dedicated control channel, thereby eliminating excessive signaling. The method is simply to either have a release indication in the paging message, or to allow the connection release procedure on the paging control channel. Upon receipt of the release indication or RRC CONNECTION RELEASE message, the method of the present invention either triggers an RRC CONNECTION RELEASE COMPLETE message sent to the UTRAN, which is followed by release of all radio resources, or a release of all radio resources of the UE without alerting the UTRAN.

### BRIEF DESCRIPTION OF THE DRAWINGS

A more complete understanding of the method and system of the present invention may be acquired by reference to the following Detailed Description when taken in conjunction with the accompanying Drawings wherein:
FIGURE 1 is a diagram that illustrates a variety of user equipment available to use WCDMA in accordance with embodiments of the present invention.
FIGURE 2 is a block diagram illustrating the basic components of a telecommunications system used in conjunction with the present invention.
FIGURE 3 is a flow diagram illustrating logical channels utilized by a WCDMA system.
FIGURE 4 (PRIOR ART) is a flow chart illustrating the conventional basic channel signaling between a UE and a UTRAN.
FIGURE 5 is a flow chart of a first exemplary embodiment of the method of the present invention illustrating the basic channel signaling between a UE and a UTRAN.
FIGURE 6 is a flow chart of a second exemplary embodiment of the method of the present invention illustrating the basic channel signaling between a UE and a UTRAN.
FIGURE 7A and 7B depict logical channels mapped onto transport channels as seen from a UE and UTRAN respectively.
FIGURE 8 depicts a UE state model and state transistors.

### DETAILED DESCRIPTION OF THE PREFERRED EXEMPLARY EMBODIMENTS

The present invention involves a procedure to release a mobile telephone, personal digital assistant, or other wireless equipment from all radio resources, such as logical channel connections, which allow communication from a mobile telephone to a network. The present invention is equally applicable to cellular communication systems such as GSM, as well as several other systems. However, for the purpose of description, Wideband Code Division Multiple Access (WCDMA) is used as a reference.

The method that the present invention employs allows a mobile telephone to be released by using less signaling than the current release procedure. First, a paging message with a release indication is sent to a mobile telephone. The mobile telephone will then either send an RRC CONNECTION RELEASE COMPLETE message back to the network, which tells the network that the mobile telephone received the release indication and will release all radio resources, or the mobile telephone will release all radio resources without any additional signaling to the UTRAN. By only requiring a few signals to release a mobile telephone, congestion can be reduced and the procedure will be much quicker.

Essentially, in accordance with exemplary embodiments of the present invention, a method is provided for releasing a UE in an efficient manner which does not require a dedicated control channel. In the first and second exemplary embodiments of the present invention, either a release indication in a paging message on the paging control channel, or allowing the RRC CONNECTION RELEASE message over the paging control channel will alleviate the current need to establish a dedicated control channel.

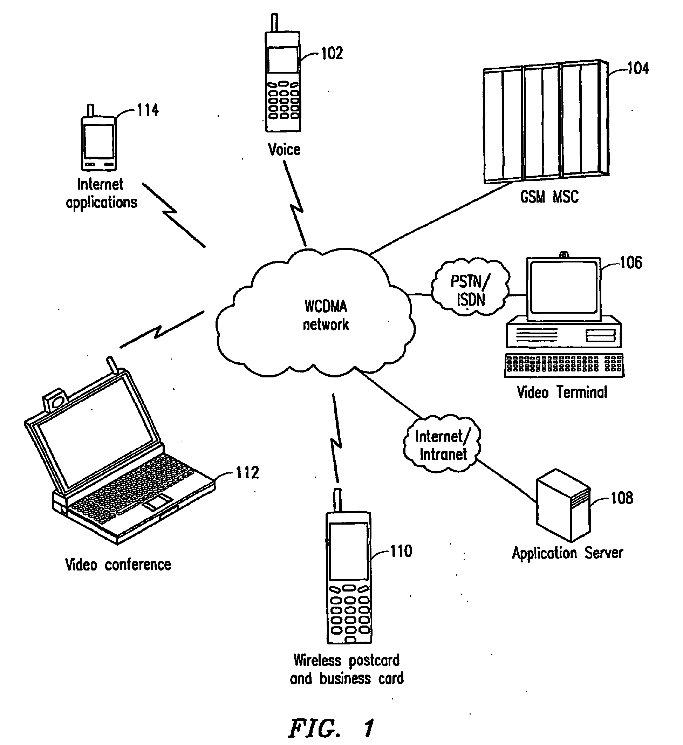

The preferred exemplary embodiments of the present invention and their advantages are best understood by referring to FIGURES 1-6 of the drawings.

FIGURE 1 is a diagram of several types of equipment available to the WCDMA network 100. In this example, a user can access WCDMA with a cellular phone 102, video terminal 106, server 108, laptop 112, or personal desk assistant (PDA) 114. The cellular phone 102 can use WCDMA for voice and Internet communications, among other things. Wireless postcards and business cards 110 can be accessed with WCDMA. The laptop 112 can utilize WCDMA for high quality video conferencing and Internet applications. The PDA 114 may use WCDMA for web browsing, video telephone, email, news, or games. The above mentioned equipment as well as several other variations are defined as user equipment

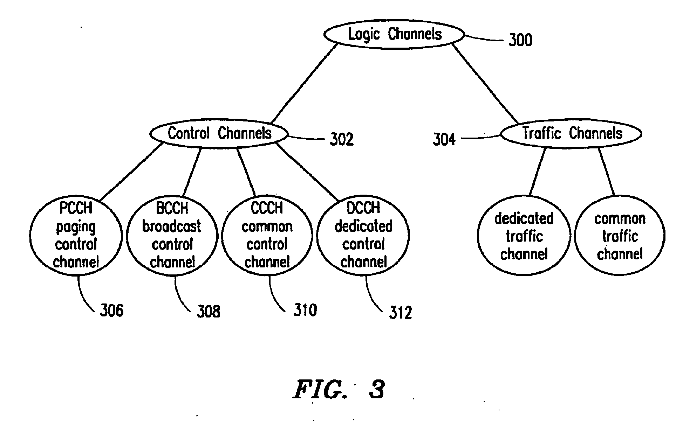

FIGURE 2 is a block diagram of an exemplary radio access network used in accordance with the present invention. There is a core network 200 that offers access to services for subscribers. The core network 200 is connected to a radio network controller 202A which controls radio resources and radio connectivity within a set of cells 204A...204E. A UTRAN registration area (URA) 206 is a geographic area consisting of one or more cells Each URA 206 is identified by a unique identity, which is broadcast in all cells belonging to the URA 206. A URA 206 can consist of cells 204A...204E controlled by more than one RNC 202A...202C. A cell 204A...204E is a geographical area where radio coverage is provided by radio base station equipment at the base station site. Each cell 204A...204E is identified by a unique identity, which is broadcast in the cell. Each cell 204A...204E can broadcast on a plurality of channels as described in Figure 3.

FIGURE 3 is a flow diagram illustrating the logical channels on which an exemplary UE may transmit or receive data. The logical channels 300 can fall into one of two categories, control channels 302 or traffic channels 304. Control channels 302 transfer control plane information such as signaling information. One such control channel 302 is a paging control channel (PCCH) 306. The PCCH 306 is a downlink channel that transfers paging information. A broadcast control channel 308 is another control channel which is a downlink channel used for broadcasting system control information. The common control channel 310 is a bi-directional channel used for transmitting control information between the network and UEs. This channel is commonly used by UEs having no RRC connection with the network and by UEs using common transport channels when accessing a new cell after reselection. There is also a dedicated control channel 312 (DCCH) that is a point-to-point bi-directional channel that transmits dedicated control information between a UE and a network. This channel is established through an RRC connection setup procedure. In the exemplary embodiments, the control channels 302 are used by a WCDMA system to page and release a UE. In the current release procedure, the paging control channel 306, the CCCH 310, and the DCCH 312 signal and release a UE. The PCCH 306 carries a paging message including the UE's identity number, or a temporary number. The paging message alerts the UE of an incoming call or an incoming message for example. Conversely, in the exemplary embodiment of the present invention, the CCCH 310 (which is mapped to a random access channel) and the PCCH 306 signal and release a UE. Therefore, fewer channels and less signaling are needed when implementing the present invention as compared to the conventional method.

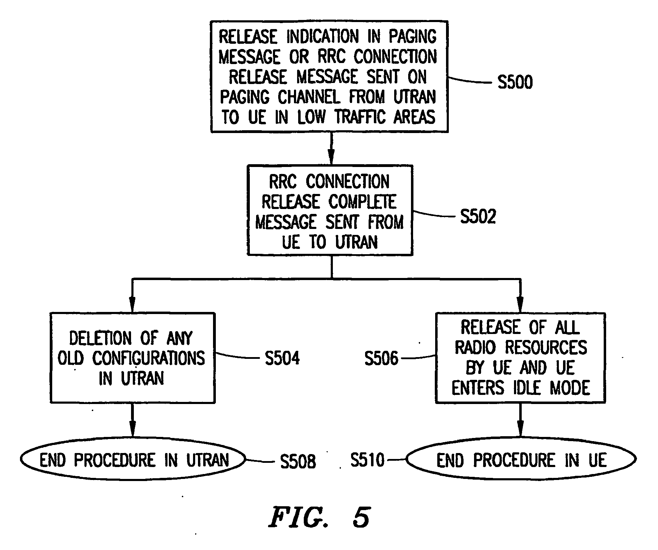

FIGURE 4 (PRIOR ART) is a flow diagram of the conventional release procedure of a UE in accordance with the release 99 of the WCDMA standard. At step s400, a UE in a low traffic area receives a page message. Using conventional procedures, a page message is sent, for example, to establish a signaling connection, to trigger a certain UE state, or to trigger reading of updated system information. In this particular procedure, the page message is sent to switch the UE to the cell-FACH state in step s402. Once in the new state, the UE sends a CELL UPDATE message to the UTRAN. This step, s404, is always done in response to a page. In step s406, the UTRAN sends a CELL UPDATE CONFIRM message on a dedicated control channel. Next, in step 408, the UE updates its identities and transmits a radio network temporary identifier (RNTI) REALLOCATION COMPLETE message on the DCCH. Once the DCCH has been established by the above part of the procedure, the actual release portion of the procedure can be executed. The UTRAN can now send a RRC CONNECTION RELEASE message on the DCCH to the UE in step s410, which can interrupt any ongoing procedures in the UE. In step s412, the RRC CONNECTION RELEASE COMPLETE message is sent back to the UTRAN from the UE. At this point both step s414 and s416 occur. Once the UTRAN receives the RRC CONNECTION RELEASE COMPLETE message, the UTRAN deletes old configurations. When the UE sends the RRC CONNECTION RELEASE COMPLETE message, the UE releases all radio resources and enters an idle mode. After both steps s414 and s416 occur, the procedure ends in both the UE and the UTRAN with steps s418 and s420. FIGURE 5 shows a first exemplary method of a release procedure in accordance with the present invention. The advantages of the exemplary method are a decreased amount of signaling, decreased congestion, and increased quickness, among other things. No dedicated control channel is needed in the exemplary method, in fact the first step, step s500, sends a release indication in a paging message, or sends an RRC CONNECTION RELEASE message on the paging control channel from the UTRAN, which may interrupt any ongoing procedures in the UE. In step s502, an RRC CONNECTION RELEASE COMPLETE message is sent from the UE to the UTRAN on the CCCH. Following step s502, steps s504 and s506 occur. Once the UE sends the RRC CONNECTION RELEASE COMPLETE message, the UE releases all radio resources and enters an idle mode in step s506, and the procedure ends in the UE in step s510. Also, once the LJTRAN receives the RRC CONNECTION RELEASE COMPLETE message, the UTRAN deletes old configurations in step s504, and the procedure ends in the UTRAN in step s508.

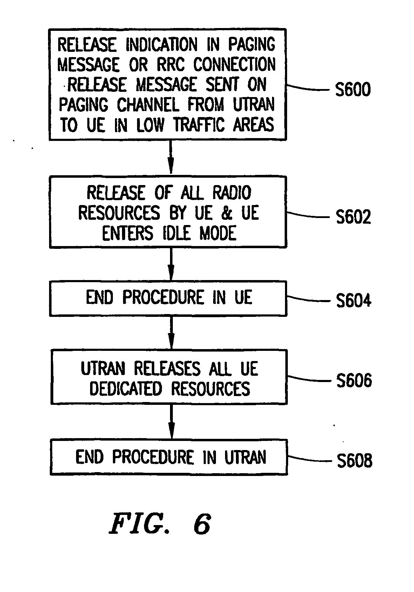

FIGURE 6 shows a second exemplary method of a release procedure in accordance with the present invention. The second embodiment decreases uplink interference by not sending an uplink message from the UE. In the first step s600, a release indication in a paging message, or an RRC CONNECTION RELEASE message is sent via the PCCH from the UTRAN to the UE. After the UE receives this message, in step s602, the UE releases all radio resources and enters an idle mode. Step s604 ends the procedure on the UE side. Next, in step s606, which is a predetermined amount of time later, the UTRAN releases all UE dedicated resources. Step s608 ends the procedure on the UTRAN side.

From the foregoing, it can be readily appreciated by those skilled in the art that the present invention provides a method for releasing a UE with minimal signaling and without establishing a dedicated control channel. The method disclosed can release a UE in a more efficient manner as compared to the prior art. In particular, in a first exemplary method, by using a release indication within the paging message, an RRC CONNECTION COMPLETE message immediately follows the paging message. In a second exemplary method, once the paging message or RRC CONNECTION RELEASE message is received, the UE releases all radio resources and enters an idle mode without alerting the UTRAN. No excessive signals or messages are transmitted in order to release the UE. It will also be apparent to those skilled in the art that the invention can be readily implemented, for example, by suitable changes in the software, hardware, or both, in conventional UEs and UTRAN.

Although preferred embodiments of the method of the present invention have been illustrated in the accompanying Drawings and described in the foregoing Detailed Description, it will be understood that the invention is not limited to the embodiments disclosed, but is capable of numerous rearrangements, modifications and substitutions without departing from the scope of the invention as set forth and defined by the following claims.

## Claims

1. A method for releasing a user equipment, UE, in a cellular telecommunication system communicating from a radio access network, RAN, over an air interface with said user equipment UE which is in a Paging Channel mode, PCH-mode, said air interface comprising:
a paging control channel, PCCH, for communicating paging messages to said UE from said RAN;
a common control channel, CCCH, for communicating messages between said UE and said RAN,
**characterized in** the following steps
sending (S500,S600), by the radio access network RAN, a paging message with a release indication via a paging control channel PCCH while the UE is in said PCH-mode, said release indication instructing the UE to release predetermined radio resources;
receiving, by said UE, said release indication via said paging control channel;
sending (S502), by said UE, a response message to said RAN via said common control channel CCCH; and
receiving, by said RAN, said response message from said UE via said common control channel.

2. The method as recited in claim 1, wherein said PCH-mode is a cell-PCH-mode.

3. The method as recited in claim 1, wherein said PCH-mode is a UMTS Terrestrial Radio Access Network Registration Area - PCH mode, URA - PCH mode.

4. The method as recited in claim 1, wherein said release indication further comprises a Radio Resource Control CONNECTION RELEASE message, RRC CONNECTION RELEASE message.

5. The method as recited in claim 1, wherein said step (S502) of sending a response message on said common control channel by said UE further comprises the additional steps of:
releasing (S506) at least one predetermined radio resource; and
entering (S506) an idle mode.

6. The method as recited in claim 1, wherein said step of receiving said response message by said RAN further comprises the step of deleting (S504) a predetermined configuration in said RAN.

7. The method as recited in claim 1, further comprising the additional step of interrupting ongoing procedures in said UE.

8. The method as recited in claim 1, further comprising the additional step of monitoring, using discontinuous reception, DRX, the paging control channel by said UE during low traffic conditions.

9. The method as recited in claim 1, comprising the steps of:
omitting said sending (S502), by said UE, a response message to said RAN via a common control channel and said receiving, by said RAN, said response message from said UE via said common control channel; and instead
releasing (S602) at least one predetermined radio resource; and
entering an (S602) idle mode.

10. The method as recited in claim 9, wherein said release indication further comprises an RRC CONNECTION RELEASE message.

11. The method as recited in claim 9, further comprises the step (S504) of deleting a predetermined configuration in said RAN a predetermined amount of time after said RRC CONNECTION RELEASE message is sent.

12. The method as recited in claim 9, further comprising the additional step of interrupting ongoing procedures in said UE.

13. The method as recited in claim 9, further comprising the additional step of monitoring, using discontinuous reception, DRX, the paging control channel PCCH by said UE during low traffic conditions.

## Patentansprüche

1. Verfahren zum Freigeben einer Benutzereinrichtung, UE, in einem zellularen Telekommunikationssystem, das von einem Funkzugangsnetzwerk, RAN, über eine Luftschnittstelle mit der Benutzereinrichtung UE kommuniziert, die in einer Funkruflcanal-Betriebsart (PCH-Betriebsart) ist, wobei die Luftschnittstelle aufweist:
einen Funkruf-Steuerkanal, PCCH, zur Übermittlung von Funkrufnachrichten an die UE von dem RAN;
einen gemeinsamen Steuerkanal, CCCH, zur Übermittlung von Nachrichten zwischen der UE und dem RAN;
**gekennzeichnet durch** die folgenden Schritte:
**durch** das Funkzugangsnetzwerk RAN erfolgendes Senden (S500, S600) einer Funkrufnachricht mit einer Freigabemeldung über einen Funkruf-Steuerkanal PCCH, während die UE in der PCH-Betriebsart ist, wobei die Freigabemeldung die UE anweist, vorbestimmte Funkressourcen freizugeben;
**durch** die UE erfolgendes Empfangen der Freigabemeldung über den Funkruf-Steuerkanal;
**durch** die UE erfolgendes Senden (S502) einer Antwortnachricht an das RAN über den gemeinsamen Steuerkanal CCCH; und
**durch** das RAN erfolgendes Empfangen der Antwortnachricht von der UE über den gemeinsamen Steuerkanal.

2. Verfahren nach Anspruch 1, wobei die PCH-Betriebsart eine Zellen-PCH-Betriebsart ist.

3. Verfahren nach Anspruch 1, wobei die PCH-Betriebsart eine terrestrische UMTS-Funkzugangsnetzwerk-Registrierungsbereich-PCH-Betriebsart, URA-PCH-Betriebsart, ist.

4. Verfahren nach Anspruch 1, wobei die Freigabemeldung ferner eine Funkressourcensteuerungsverbindungsfreigabenachricht, RRC CONNECTION RELEASE-Nachricht, aufweist.

5. Verfahren nach Anspruch 1, wobei der Schritt (S502) des Sendens einer Antwortnachricht auf dem gemeinsamen Steuerkanal durch die UE ferner die folgenden zusätzlichen Schritte aufweist:
Freigeben (S506) mindestens einer vorbestimmten Funkressource; und
Eintreten (S506) in eine Frei-Betriebsart.

6. Verfahren nach Anspruch 1, wobei der Schritt des Empfangens der Antwortnachricht durch das RAN ferner den folgenden Schritt aufweist: Löschen (S504) einer vorbestimmten Konfiguration in dem RAN.

7. Verfahren nach Anspruch 1, ferner mit dem folgenden zusätzlichen Schritt: Unterbrechen laufender Prozeduren in der UE.

8. Verfahren nach Anspruch 1, ferner mit dem folgenden zusätzlichen Schritt: Überwachen des Funkruf-Steuerkanals durch die UE unter verkehrsschwachen Bedingungen unter Verwendung von diskontinuierlichem Empfang, DRX.

9. Verfahren nach Anspruch 1, mit den folgenden Schritten:
Unterlassen des durch die UE erfolgenden Sendens (S502) einer Antwortnachricht an das RAN über einen gemeinsamen Steuerkanal und des durch das RAN erfolgenden Empfangens der Antwortnachricht von der UE über den gemeinsamen Steuerkanal; und stattdessen
Freigeben (S602) mindestens einer vorbestimmten Funkressource; und
Eintreten (S602) in eine Frei-Betriebsart.

10. Verfahren nach Anspruch 9, wobei die Freigabemeldung ferner eine RRC CONNECTION RELEASE-Nachricht aufweist.

11. Verfahren nach Anspruch 9, ferner mit dem folgenden Schritt: Löschen (S504) einer vorbestimmten Konfiguration in dem RAN, einen vorbestimmten Zeitraum nachdem die RRC CONNECTION RELEASE-Nachricht gesendet worden ist.

12. Verfahren nach Anspruch 9, ferner mit dem folgenden zusätzlichen Schritt: Unterbrechen laufender Prozeduren in der UE.

13. Verfahren nach Anspruch 9, ferner mit dem folgenden zusätzlichen Schritt: Überwachen des Funkruf-Steuerkanals PCCH durch die UE unter verkehrsschwachen Bedingungen unter Verwendung von diskontinuierlichem Empfang, DRX.

## Revendications

1. Procédé pour libérer un équipement d'utilisateur, soit un UE, dans un système de télécommunication cellulaire qui communique depuis un réseau d'accès radio, soit un RAN, sur une interface hertzienne avec ledit équipement d'utilisateur UE, lequel est dans un mode canal d'appel, soit un mode PCH, ladite interface hertzienne comprenant:
un canal de commande d'appel, soit un PCCH, pour communiquer des appels de messagerie audit UE depuis ledit RAN;
un canal de commande commun, soit un CCCH, pour communiquer des messages entre ledit UE et ledit RAN,
**caractérisé par** les étapes qui suivent:
envoi (S500, S600), par le réseau d'accès radio RAN, d'un appel de messagerie avec une indication de libération via un canal de commande d'appel PCCH tandis que l'UE est dans ledit mode PCH, ladite indication de libération demandant en instruction à l'UE de libérer des ressources radio prédéterminées;
réception, par ledit UE, de ladite indication de libération via ledit canal de commande d'appel;
envoi (S502), par ledit UE, d'un message de réponse audit RAN via ledit canal de commande commun CCCH; et
réception, par ledit RAN, dudit message de réponse en provenance dudit UE via ledit canal de commande commun.

2. Procédé selon la revendication 1, dans lequel ledit mode PCH est un mode PCH de cellule.

3. Procédé selon la revendication 1, dans lequel ledit mode PCH est un mode de Zone d'Enregistrement de Réseau d'Accès Radio Terrestre UMTS-PCH, soit un mode UTRA-PCH.

4. Procédé selon la revendication 1, dans lequel ladite indication de libération comprend en outre un message de Libération de Connexion de Commande de Ressource Radio, soit un message RRC CONNECTION RELEASE.

5. Procédé selon la revendication 1, dans lequel ladite étape (S502) d'envoi d'un message de réponse sur ledit canal de commande commun par ledit UE comprend en outre les étapes additionnelles de:
libération (S506) d'au moins une ressource radio prédéterminée; et
entrée (S506) dans un mode repos.

6. Procédé selon la revendication 1, dans lequel ladite étape de réception dudit message de réponse par ledit RAN comprend en outre l'étape de suppression (S504) d'une configuration prédéterminée dans ledit RAN.

7. Procédé selon la revendication 1, comprenant en outre l'étape additionnelle d'interruption de procédures en cours dans ledit UE.

8. Procédé selon la revendication 1, comprenant en outre l'étape additionnelle de surveillance, en utilisant une réception discontinue, soit une DRX, du canal de commande de messagerie par ledit UE pendant des conditions de trafic faible.

9. Procédé selon la revendication 1, comprenant les étapes de:
omission dudit envoi (S502), par ledit UE, d'un message de réponse audit RAN via un canal de commande commun et de ladite réception, par ledit RAN, dudit message de réponse en provenance dudit UE via ledit canal de commande commun; et en lieu et place
libération (S602) d'au moins une ressource radio prédéterminée; et
entrée (S602) dans un mode repos.

10. Procédé selon la revendication 9, dans lequel ladite indication de libération comprend en outre un message RRC CONNECTION RELEASE.

11. Procédé selon la revendication 9, comprenant en outre l'étape (S504) de suppression d'une configuration prédéterminée dans ledit RAN une durée temporelle prédéterminée après que ledit message RRC CONNECTION RELEASE est envoyé.

12. Procédé selon la revendication 9, comprenant en outre l'étape additionnelle d'interruption de procédures en cours dans ledit UE.

13. Procédé selon la revendication 9, comprenant en outre l'étape additionnelle de surveillance, en utilisant une réception discontinue, soit une DRX, du canal de commande de messagerie PCCH par ledit UE pendant des conditions de trafic faible.
